# EUROPÄISCHE PATENTSCHRIFT

(11) **EP 3 755 926 B1**
(45) Veröffentlichungstag und Bekanntmachung des Hinweises auf die Patenterteilung: **08.03.2023**
(21) Anmeldenummer: 19701344.4
(22) Anmeldetag: 22.01.2019
(51) Int. Cl.: F16J 15/34

(54) **GLEITRINGDICHTUNGSANORDNUNG MIT GETEILTER WELLENHÜLSE**
SLIP RING SEAL ARRANGEMENT WITH SPLIT SHAFT SLEEVE
ENSEMBLE JOINT D'ÉTANCHÉITÉ À BAGUES DE GLISSEMENT POURVU D'UN MANCHON D'ARBRE DIVISÉ

(30) Priorität: 22.02.2018 DE 102018202681
(43) Veröffentlichungstag der Anmeldung: 30.12.2020
(73) Patentinhaber: EagleBurgmann Germany GmbH & Co. KG, 82515 Wolfratshausen (DE)
(72) Erfinder: RICHTER, Stefan, 82515 Wolfratshausen (DE); MATUSCHEK, Alfred, 82538 Geretsried (DE); STEIGENBERGER, Hans, 82547 Eurasburg (DE)
(74) Vertreter: Hoefer & Partner Patentanwälte mbB
(86) Internationale Anmeldenummer: PCT/EP2019/051436
(87) Internationale Veröffentlichungsnummer: WO 2019/162015

(56) Entgegenhaltungen:
- DE-A1-102017 205 394
- DE-U1- 20 312 908

## Beschreibung

Die vorliegende Erfindung betrifft eine Gleitringdichtungsanordnung mit geteilter Wellenhülse, welche in zwei ringförmige Hülsenteile geteilt ist und einen Gleitring in Axialrichtung zwischen den Hülsenteilen klemmen kann.

Gleitringdichtungsanordnungen sind aus dem Stand der Technik in unterschiedlichen Ausgestaltungen bekannt. Beispielsweise werden derartige Gleitringdichtungsanordnungen bei Kreiselpumpen eingesetzt, um an einer Welle der Kreiselpumpe abzudichten. Hierbei ist es bekannt, die Gleitringdichtung auf einer einteiligen Wellenhülse anzuordnen, so dass die Gleitringdichtungsanordnung einem Kunden als vormontierte Baugruppe lieferbar ist und lediglich auf einer Welle befestigt werden muss. Dies hat insbesondere Montagevorteile. Nachteilig bei derartigen Gleitringdichtungen ist jedoch, dass die einstückige Wellenhülse mit dem abzudichtenden Produkt in Berührung kommt, so dass in Abhängigkeit des Produkts ein sehr hochwertiger und teurer Werkstoff für die gesamte Wellenhülse verwendet werden muss. Dadurch ist die Wellenhülse ein sehr langes, rohrartiges Bauteil, welches bei der Montage Probleme bereiten kann. Ferner ist aus der DE 203 12 908 U1 eine Gleitringdichtungsanordnung gemäß dem Oberbegriff des Anspruchs 1 bekannt.

Es ist daher Aufgabe der vorliegenden Erfindung, eine Gleitringdichtungsanordnung bereitzustellen, welche bei einfachem Aufbau und einfacher, kostengünstiger Herstellbarkeit insbesondere eine verbesserte Handhabung bei einer Montage und Demontage an einer Welle ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass eine Montage und Demontage deutlich vereinfacht ist. Ferner kann eine Wellenhülse der Gleitringdichtungsanordnung deutlich kostengünstiger hergestellt werden. Die Gleitringdichtungsanordnung umfasst hierbei eine Gleitringdichtung mit einem rotierenden und einem stationären Gleitring, welche zwischen ihren Gleitflächen einen Dichtspalt definieren. Ferner umfasst die Gleitringdichtungsanordnung eine Wellenhülsenanordnung mit einer geteilten Wellenhülse. Die Wellenhülse ist in der Ebene senkrecht zur Axialrichtung axial in einen ersten ringförmigen Hülsenteil und einen zweiten ringförmigen Hülsenteil unterteilt. Die beiden Hülsenteile sind dann mittels einer Rastverbindung miteinander verbunden. Der rotierende Gleitring ist an der Wellenhülsenanordnung angeordnet und die Rastverbindung umfasst wenigstens eine Rastnase und eine die Rastnase aufnehmende Rastausnehmung, um ein Verrasten der beiden Hülsenteile miteinander zu ermöglichen. Hierbei kann die Rastverbindung schnell und einfach verrastet werden und ebenso schnell und einfach wieder gelöst werden. Somit ist es beispielsweise auch möglich, dass bei einem Austausch der Gleitringe ein Teil der zweiteiligen Wellenhülsenanordnung an der abzudichtenden Welle verbleibt und lediglich die Rastverbindung gelöst wird und einer der Hülsenteile entfernt wird und so die Gleitringe ausgetauscht werden können. Die Verbindung der beiden Hülsenteile kann somit ohne zusätzliche Bauteile, wie Schrauben oder dergleichen, ermöglicht werden.

Weiterhin ist die Rastverbindung eine Steck-Dreh-Verbindung. Hierbei wird die Rastverbindung derart bereitgestellt, dass die beiden Hülsenteile zuerst eine Steckbewegung in Axialrichtung der Wellenhülsenanordnung ausführen und anschließend eine Relativverdrehung zwischen dem ersten und zweiten Hülsenteil erfolgt, bis die Rastnase der Rastverbindung in einer Rastausnehmung aufgenommen ist. Dann ist die Wellenhülsenanordnung verrastet. Zum Lösen der Rastverbindung muss hierbei zuerst in entgegengesetzter Drehrichtung ein Verdrehen der beiden Hülsenteile erfolgen, um die Verrastung zu lösen, und anschließend ein axiales Entfernen des ersten Hülsenteils vom zweiten Hülsenteil.

Vorzugsweise umfasst die Rastverbindung eine Gewindeanordnung mit einem Gewindegang. Dabei ist die Rastausnehmung am Gewindegang angeordnet. Die Rastnase muss, um zur Rastausnehmung zu gelangen, zuerst über den Gewindegang geführt werden. Da der Gewindegang eine Gewindesteigung in einem spitzen Winkel zu einer Radialebene zur Mittelachse der Wellenhülsenanordnung aufweist, ergibt sich eine Annäherung der ersten und zweiten Hülsenteile bei der Relativverdrehung der beiden Hülsenteile zueinander, da beim Verdrehen der Rastnase im Gewindegang die beiden Hülsenteile in Axialrichtung aufeinander zubewegt werden.

Vorzugsweise ist zwischen dem Gewindegang und der Rastausnehmung ein Damm angeordnet. Der Damm ist ein ausgehend von einem Boden des Gewindegangs erhöhter Bereich und weist vorzugsweise eine Auflauframpe und eine Ablauframpe auf. Dadurch kann die Rastnase den Damm einfach bei einem Verdrehen überwinden. Gleichzeitig kann auch ein einfaches Lösen der beiden Hülsenteile durch die Rampen ermöglicht werden.

Die Rastausnehmung der Rastverbindung ist vorzugsweise am Ende des Gewindegangs angeordnet. Somit schließt die Rastausnehmung den Gewindegang ab.

Weiter bevorzugt ist am Gewindegang eine Zugangsausnehmung zum Zuführen der Rastnase zum Gewindegang vorgesehen. Somit erfolgt das Einstecken der Rastnase in den anderen Hülsenteil im Bereich der Zugangsausnehmung, bis die Rastnase am Gewindegang angeordnet ist. Erst dann erfolgt ein Verdrehen der beiden Hülsenteile gegeneinander.

Besonders bevorzugt weist der erste Hülsenteil einen Anschlag an einem Außenumfang auf, in welchem der rotierende Gleitring anliegt und am zweiten Hülsenteil ist eine Elastomerdichtung angeordnet, welche am rotierenden Gleitring einer Fläche anliegt, wobei der rotierende Gleitring zwischen dem Anschlag und der Elastomerdichtung angeordnet ist.

Besonders bevorzugt übt hierbei die Rastverbindung im eingerasteten Zustand eine Kraft F in Axialrichtung auf die Elastomerdichtung aus, um den rotierenden Gleitring zwischen der Elastomerdichtung und dem Anschlag am ersten Hülsenteil zu klemmen. Somit kann gleichzeitig mit einer Verrastung des ersten und zweiten Hülsenteils auch ein Klemmen des rotierenden Gleitrings an der Wellenhülsenanordnung ermöglicht werden. Dadurch können weitere Bauteile zum Halten des Gleitrings, insbesondere Gleitringträger oder dergleichen, entfallen. Hierdurch kann eine besonders einfach aufgebaute und kostengünstige Gleitringdichtungsanordnung bereitgestellt werden. Da beim Klemmen des Gleitrings dieser an der Gleitringrückseite mit der weichen Elastomerdichtung in Kontakt steht, kann eine Beschädigung des Gleitrings vermieden werden.

Die Elastomerdichtung ist hierbei vorzugsweise ein O-Ring.

Der Anschlag ist vorzugsweise einteilig mit dem ersten Hülsenteil ausgebildet und verläuft ringförmig umlaufend, um eine gleichmäßige Kraftverteilung bei einem Klemmen des rotierenden Gleitrings am Anschlag zu erreichen.

Weiter bevorzugt sind das erste und zweite Hülsenteil jeweils aus unterschiedlichen Materialien hergestellt. Hierbei wird das Hülsenteil, welches mit dem abzudichtenden Produkt in Berührung kommt, falls dieses ein aggressives Produkt oder ein toxisches Produkt oder dergleichen ist, aus einem höherwertigeren und üblicherweise teureren Werkstoff hergestellt. Das andere Hülsenteil, welches keine Produktberührung hat, kann hingegen aus einem kostengünstigeren Material hergestellt werden. Auch hierdurch können die Herstellungskosten im Vergleich mit den bisher verwendeten einteiligen Wellenhülsen signifikant reduziert werden.

Weiter bevorzugt weist die Rastverbindung wenigstens zwei Rastnasen und zwei Rastausnehmungen auf. Besonders bevorzugt weist die Rastverbindung genau drei Rastnasen und genau drei Rastausnehmungen auf.

Besonders bevorzugt sind die Rastnasen und die Rastausnehmungen entlang des Umfangs in gleichen Abständen zueinander angeordnet.

Vorzugsweise ist ein Innendurchmesser des ersten Hülsenteils gleich einem Innendurchmesser des zweiten Hülsenteils.

Ferner betrifft die vorliegende Erfindung eine Pumpe, insbesondere eine Kreiselpumpe mit einer erfindungsgemäßen Gleitringdichtungsanordnung. Die Gleitringdichtungsanordnung dichtet dabei ein mit der Pumpe zu förderndes flüssiges Medium an einer Rotationswelle der Pumpe ab.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische Schnittansicht einer Gleitringdichtungsanordnung gemäß einem bevorzugten Ausführungsbeispiel der Erfindung,
- Fig. 2: eine schematische, perspektivische Schnittansicht einer Wellenhülsenanordnung der Gleitringdichtungsanordnung von Fig. 1,
- Fig. 3: eine weitere schematische, perspektivische Schnittansicht der Wellenhülsenanordnung aus einem anderen Winkel im unverrasteten Zustand,
- Fig. 4: eine schematische, perspektivische Schnittansicht der Wellenhülsenanordnung von Fig. 3 im verrasteten Zustand,
- Fig. 5: eine schematische Teil-Schnittansicht der Wellenhülsenanordnung von Fig. 2, und
- Fig. 6: eine schematische Schnittansicht eines ersten und zweiten Hülsenteils der Wellenhülsenanordnung der Erfindung im auseinandergebauten Zustand.

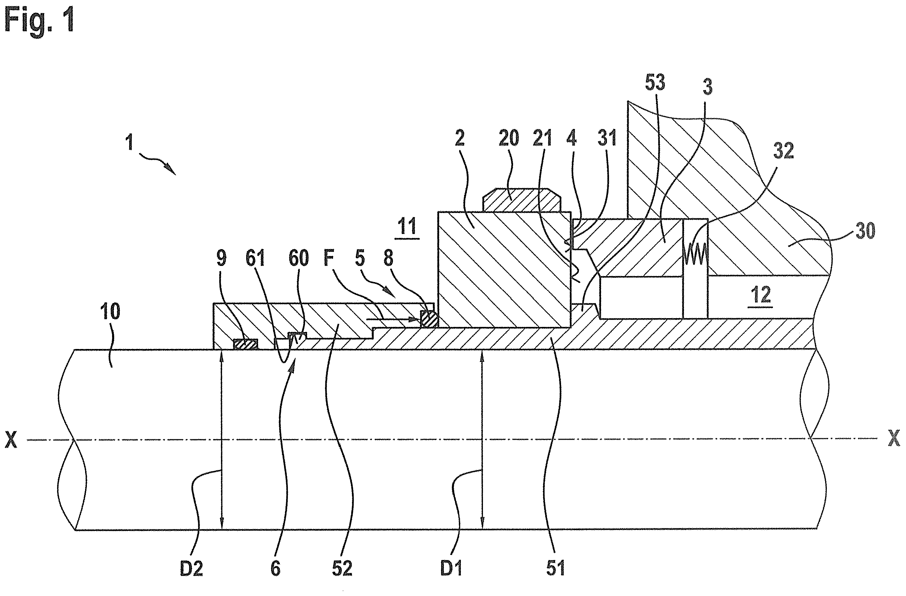

Nachfolgend wird unter Bezugnahme auf die Figuren 1 bis 6 eine Gleitringdichtungsanordnung 1 gemäß einem ersten Ausführungsbeispiel der Erfindung im Detail beschrieben.

Die Gleitringdichtungsanordnung 1 dichtet hierbei an einer Welle 10 ab, welche Teil einer nicht gezeigten Pumpe ist.

Die Gleitringdichtungsanordnung 1 umfasst eine Gleitringdichtung mit einem rotierenden Gleitring 2 und einem stationären Gleitring 3, welche zwischen einer Gleitfläche 21 des rotierenden Gleitrings 2 und einer Gleitfläche 31 des stationären Gleitrings 3 einen Dichtspalt 4 definiert.

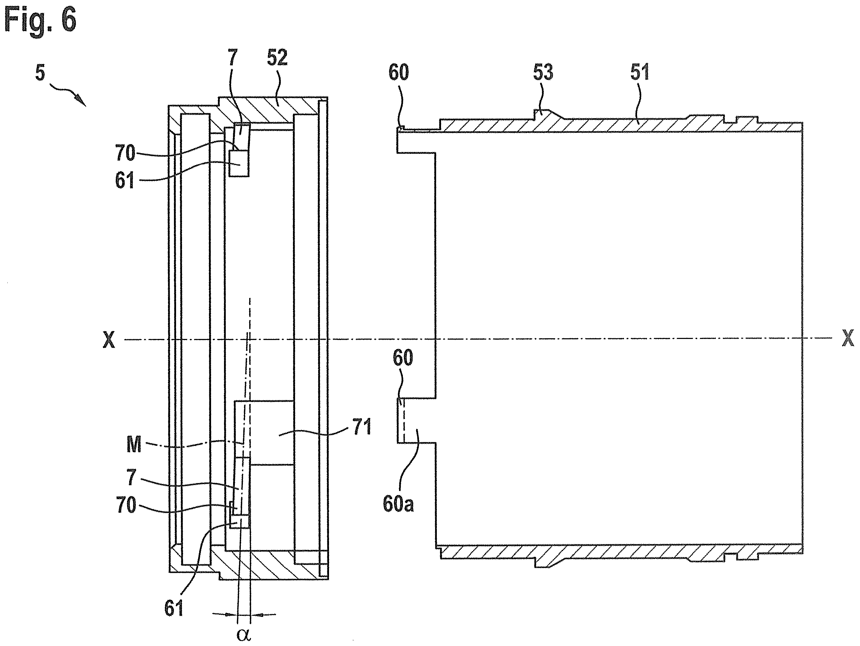

Die Gleitringdichtungsanordnung 1 umfasst ferner eine Wellenhülsenanordnung 5, welche im Detail aus Fig. 6 ersichtlich ist. Die Wellenhülsenanordnung 5 umfasst hierbei ein erstes Hülsenteil 51 und ein zweites Hülsenteil 52. In Fig. 6 sind die beiden Hülsenteile 51, 52 im nicht miteinander verbundenen Zustand gezeigt, um den Aufbau zu verdeutlichen. Ein Innendurchmesser D1, D2 der beiden Hülsenteile 51, 52 ist dabei gleich und konstant ohne Absatz.

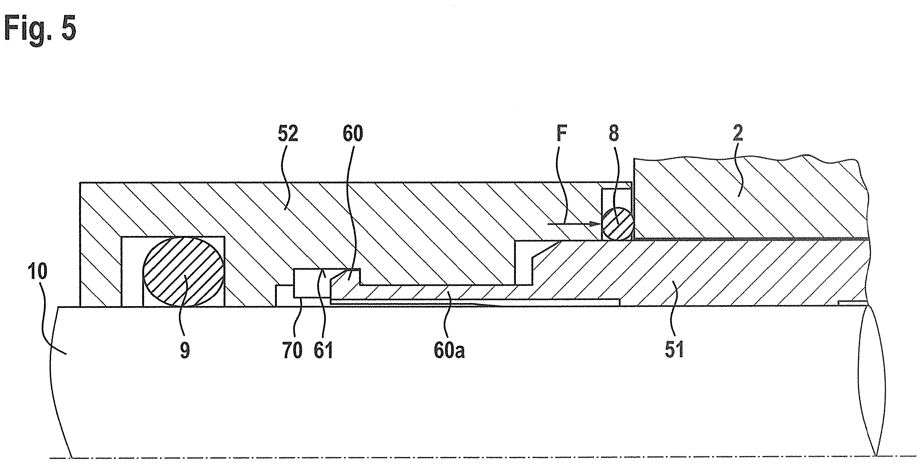

Die beiden Hülsenteile 51, 52 der Wellenhülsenanordnung 5 können mittels einer Rastverbindung 6 miteinander verbunden werden. Der verbundene Zustand der beiden Hülsenteile 51, 52 ist hierbei in Fig. 5 dargestellt. Die Rastvorrichtung 6 umfasst drei Rastnasen 60 und drei Rastausnehmungen 61. Die Rastnasen 60 sind am ersten Hülsenteil 51 angeordnet und die Rastausnehmungen 61 sind am zweiten Hülsenteil 52 angeordnet.

Wie aus Fig. 6 deutlich wird, sind entlang des Umfangs in gleichen Umfangsabständen des ersten Hülsenteils 51 drei Rastnasen 60 vorgesehen und entsprechend auch drei Rastausnehmungen 61 am zweiten Hülsenteil 52.

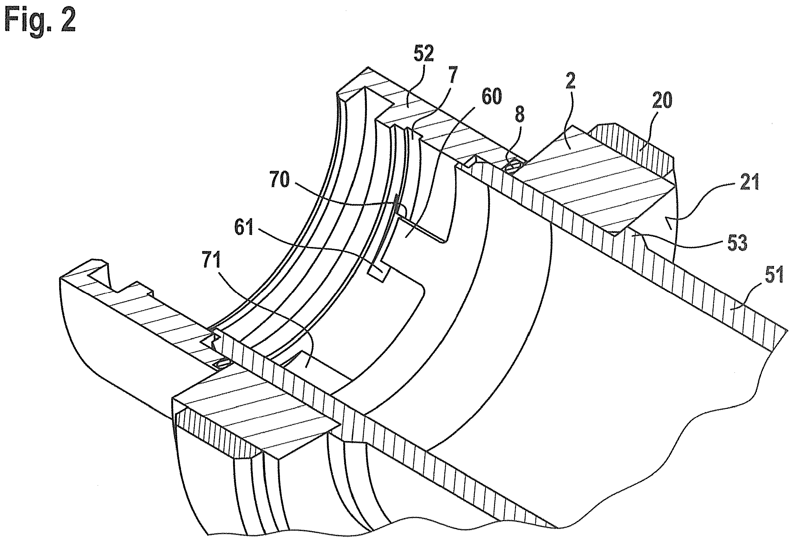

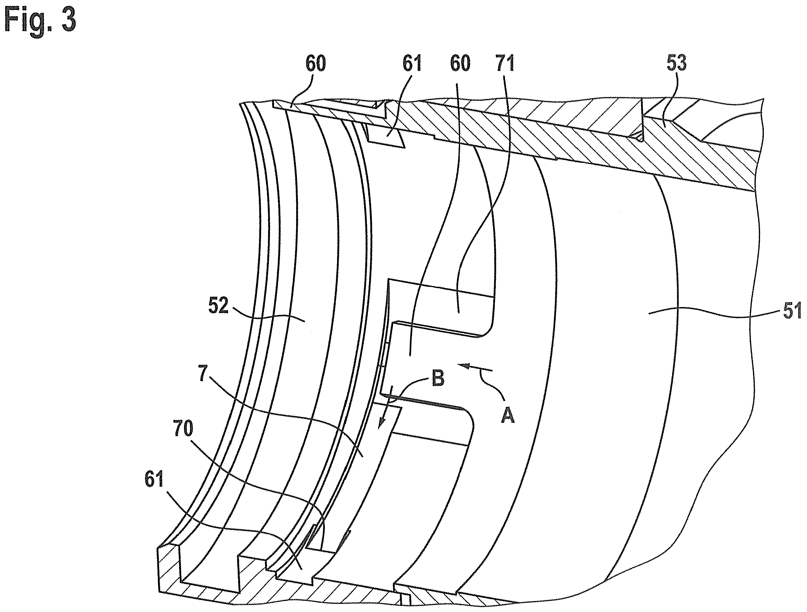

Wie aus den Fig. 2 und 3 ersichtlich ist, umfasst die Rastverbindung 6 ferner noch einen Gewindegang 7 und eine Zugangsausnehmung 71. Der Gewindegang 7 weist dabei eine Mittellinie M auf, welche in einem Winkel α zu einer Senkrechten einer Mittellinie X-X der Wellenhülsenanordnung 5 angeordnet ist (vgl. Fig. 6). Der Winkel α bestimmt die Steigung des Gewindegangs 7 und ist in diesem Ausführungsbeispiel ca. 3°. Durch den Gewindegang 7 wird somit bei der Verrastung zwischen dem ersten und zweiten Hülsenteil 51, 52 eine Axialbewegung der beiden Hülsenteile 51, 52 aufeinander zu erreicht.

Um die beiden Hülsenteile 51, 52 miteinander zu verrasten, wird, wie in Fig. 3 durch die Pfeile A und B angedeutet, eine Steck-Dreh-Verbindung ausgeführt. Hierbei werden die Rastnasen 60 jeweils in Zugangsausnehmungen 71 am zweiten Hülsenteil 52 in Richtung des Pfeils A axial eingeführt. Anschließend werden die beiden Hülsenteile 51, 52 relativ zueinander verdreht, so dass die Rastnasen 60, wie in Fig. 3 durch den Pfeil B angedeutet, in den Gewindegängen 7 in Richtung zu den Rastausnehmungen 61 bewegt. Wie insbesondere aus Fig. 6 ersichtlich ist, sind die Rastausnehmungen 61 hierbei jeweils am Ende eines Gewindegangs 7 angeordnet.

Wie weiterhin aus Fig. 3 und 5 ersichtlich ist, ist zwischen der Rastausnehmung 61 und dem Gewindegang 7 ein Damm 70 vorgesehen. Bei der Bewegung der Rastnase 60 in Richtung des Pfeils B muss die Rastnase 60 somit den Damm 70 überwinden, um in die Rastausnehmung 61 zu gelangen. Hierbei sind jeweils Rampen zu beiden Seiten des Damms 70 vorgesehen, um ein einfaches Verrasten mit möglichst geringem Kraftaufwand zu ermöglichen. Bei dem Überschreiten des Damms 70 erfolgt hierbei eine elastische Verformung eines Verbindungsstücks 60a der Rastnase 60, welches die Rastnase 60 mit dem ersten Hülsenteil 51 verbindet. Der Damm 70 bewirkt somit eine Sicherung des ersten Hülsenteils 51 am zweiten Hülsenteil 52.

Wie weiter insbesondere aus den Fig. 2, 3 und 6 ersichtlich ist, ist am ersten Hülsenteil 51 am Außenumfang ferner ein Anschlag 53 für den rotierenden Gleitring 2 vorgesehen. Wie in Fig. 2 gezeigt, liegt der rotierende Gleitring 2 dabei am Anschlag 53 des ersten Hülsenteils 51 an. Weiterhin ist am zweiten Hülsenteil 52 eine Elastomerdichtung 8 (erste Dichtung) an einer Stirnseite des zweiten Hülsenteils 52, welches in Richtung zum ersten Hülsenteil 51 gerichtet ist, vorgesehen. Wie aus den Fig. 2 und 5 ersichtlich ist, liegt hierbei die Elastomerdichtung 8 an der Seite am rotierenden Gleitring 2 an, welche der Gleitfläche 21 gegenüberliegt. Da im verrasteten Zustand eine Relativbewegung des ersten und zweiten Hülsenteils 51, 52 in Richtung aufeinander zu erfolgt, kann durch die Anordnung der Elastomerdichtung 8 eine Vorspannkraft F auf die Elastomerdichtung 8 ausgeübt werden und somit der rotierende Gleitring 2 zwischen dem Anschlag 53 und der Elastomerdichtung 8 am zweiten Hülsenteil 52 geklemmt werden. Hierdurch wird eine sichere Fixierung des rotierenden Gleitrings 2 an der Wellenhülsenanordnung 5 ermöglicht, ohne dass hierbei weitere Bauteile notwendig sind. Die weiche Elastomerdichtung 8 verhindert dabei Beschädigungen durch das Einspannen. Somit wird ein Kontat zwischen dem rotierenden Gleitring 2 und zweiten Hülsenteil 52 vermieden und im Betrieb immer ein Spalt aufrechterhalten. Insbesondere muss keine Verschraubung oder dergleichen vorgesehen werden, so dass der rotierende Gleitring 2 frei von Ausnehmungen oder Schwächungen oder dergleichen bereitgestellt werden kann. Hierdurch wird die Lebensdauer des rotierenden Gleitrings weiter verbessert.

Die Elastomerdichtung 8 ist vorzugsweise als O-Ring vorgesehen.

Um eine sichere Abdichtung an der Welle 10 zu erreichen, ist ferner noch eine zweite Dichtung 9 am zweiten Hülsenteil 52 an der zur Welle gerichteten Seite vorgesehen. Die zweite Dichtung 9 ist vorzugsweise ebenfalls ein O-Ring.

Wie weiter insbesondere aus Fig. 1 ersichtlich ist, kann die Gleitringdichtungsanordnung 1 somit eine Produktseite 11 von einer Atmosphärendruckseite 12 abdichten. Wie in Fig. 1 gezeigt, kommt hierbei das erste Hülsenteil 51 nicht mit dem Produkt in Kontakt, sondern lediglich das zweite Hülsenteil 52 kommt mit dem Produkt in Kontakt. Hierdurch ist es möglich, dass die beiden Hülsenteile 51, 52 aus unterschiedlichen Materialien hergestellt werden können. Insbesondere bei einem aggressiven Produkt muss somit nicht mehr die gesamte Wellenhülse aus einem hochwertigen und teuren Material hergestellt werden, sondern erfindungsgemäß ist es möglich, dass nur das zweite Hülsenteil 52 aus einem hochwertigen Werkstoff hergestellt wird und das erste Hülsenteil 51 entsprechend dessen Anforderungen aus einem kostengünstigeren Werkstoff hergestellt werden kann.

Wie weiter aus Fig. 1 ersichtlich ist, ist am Außenumfang des rotierenden Gleitrings 2 eine Bandage 20 vorgesehen. Weiterhin ist am stationären Gleitring 3 eine Vorspanneinrichtung 32 in Form eines Federelements vorgesehen.

Das Bezugszeichen 30 bezeichnet dabei ein Gehäuse, an welchem der stationäre Gleitring 3 angeordnet ist.

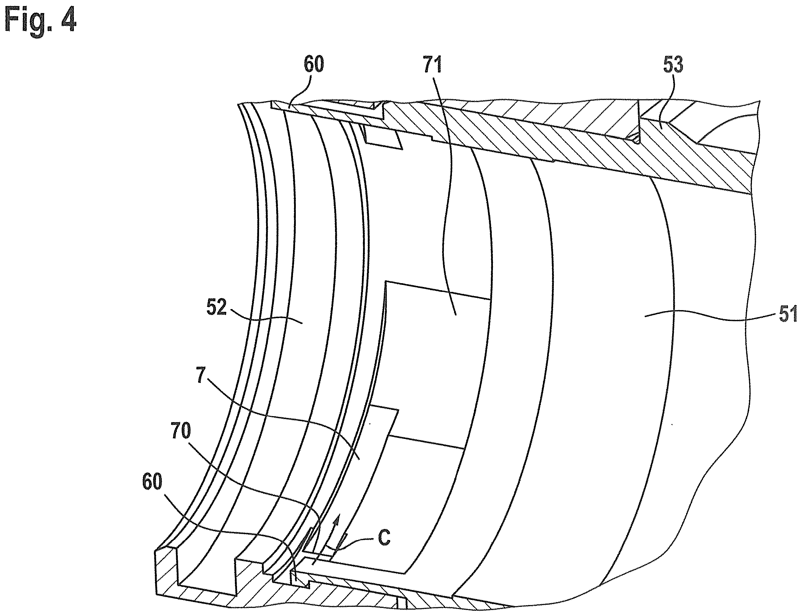

Somit wird, wie aus den Fig. 3 und 4 ersichtlich ist, die Rastverbindung 6 durch eine Steck-Dreh-Verbindung verrastet, indem die Rastnasen 60 des ersten Hülsenteils 51 in die Zugangsausnehmungen 71 in Axialrichtung gesteckt werden und anschließend ein Verdrehen des ersten Hülsenteils 51 relativ zum zweiten Hülsenteil 52 (Pfeil B) erfolgt, bis die Rastnasen 60 in die Rastausnehmungen 61 einrasten. Zum Lösen der Verrastung erfolgt zuerst ein Verdrehen der beiden Hülsenteile 51, 52 (Pfeil C in Fig. 4) und dann ein axiales Auseinanderziehen.

### Bezugszeichenliste

- 1: Gleitringdichtungsanordnung
- 2: rotierender Gleitring
- 3: stationärer Gleitring
- 4: Dichtspalt
- 5: Wellenhülsenanordnung
- 6: Rastverbindung
- 7: Gewindegang
- 8: erste Dichtung / Elastomerdichtung
- 9: zweite Dichtung
- 10: Welle
- 11: Produktseite
- 12: Atmosphärendruckseite
- 20: Bandage
- 21: Gleitfläche des rotierenden Gleitrings
- 30: Gehäuse
- 31: Gleitfläche des stationären Gleitrings
- 32: Vorspanneinrichtung
- 51: erstes Hülsenteil
- 52: zweites Hülsenteil
- 53: Anschlag
- 60: Rastnase
- 60a: Verbindungsstück
- 61: Rastausnehmung
- 70: Damm
- 71: Zugangsausnehmung
- A: Steckrichtung
- B: Drehrichtung
- C: Rück-Verdrehen
- D1: Innendurchmesser des ersten Hülsenteils
- D2: Innendurchmesser des zweiten Hülsenteils
- F: durch Rastverbindung erzeugte Klemmkraft
- M: Mittellinie
- X-X: Mittelachse der Wellenhülsenanordnung
- α: Winkel des Gewindegangs

## Patentansprüche

1. Gleitringdichtungsanordnung, umfassend:
- eine Gleitringdichtung mit einem rotierenden Gleitring (2) und einem stationären Gleitring (3), welche zwischen Gleitflächen (21, 31) einen Dichtspalt (4) definieren,
- eine Wellenhülsenanordnung (5),
- wobei der rotierende Gleitring (2) an der Wellenhülsenanordnung (5) angeordnet ist,
- **dadurch gekennzeichnet dass**
- die Wellenhülsenanordnung (5) eine geteilte Wellenhülse mit einem ersten ringförmigen Hülsenteil (51) und einem zweiten ringförmigen Hülsenteil (52), welche miteinander mittels einer Rastverbindung (6) verbunden sind, umfasst,
- wobei die Rastverbindung (6) wenigstens eine Rastnase (60) und eine die Rastnase (60) aufnehmende Rastausnehmung (61) aufweist, um ein Verrasten des ersten Hülsenteils (51) mit dem zweiten Hülsenteil (52) zu ermöglichen, und
- wobei die Rastverbindung eine Steck-Dreh-Verbindung ist.

2. Gleitringdichtungsanordnung nach Anspruch 1, wobei die Rastverbindung (6) eine Gewindeanordnung mit einem Gewindegang (7) umfasst.

3. Gleitringdichtungsanordnung nach Anspruch 2, wobei die Rastausnehmung (61) am Gewindegang (7) angeordnet ist.

4. Gleitringdichtungsanordnung nach Anspruch 2 oder 3, wobei zwischen dem Gewindegang (7) und der Rastausnehmung (61) ein Damm (70) angeordnet ist.

5. Gleitringdichtungsanordnung nach Anspruch 3 oder 4, wobei die Rastausnehmung (61) am Ende eines Gewindegangs (7) angeordnet ist.

6. Gleitringdichtungsanordnung nach einem der Ansprüche 2 bis 4, wobei am Gewindegang (7) eine Zugangsausnehmung (71) angeordnet ist, welche eingerichtet ist, ein Zuführen der Rastnase (60) zum Gewindegang (7) zu ermöglichen.

7. Gleitringdichtungsanordnung nach einem der vorhergehenden Ansprüche, wobei das erste Hülsenteil (51) einen Anschlag (53) an einem Außenumfang aufweist, wobei der rotierende Gleitring (2) am Anschlag (53) anliegt, und am zweiten Hülsenteil (52) eine Elastomerdichtung (8) angeordnet ist, wobei der rotierenden Gleitring (2) zwischen dem Anschlag (53) und der Elastomerdichtung (8) angeordnet ist.

8. Gleitringdichtungsanordnung nach Anspruch 7, wobei die Rastverbindung (6) eine Kraft (F) in Axialrichtung (X-X) auf die Elastomerdichtung (8) ausübt, um den rotierenden Gleitring (2) zwischen der Elastomerdichtung (8) am zweiten Hülsenteil (52) und dem Anschlag (53) am ersten Hülsenteil (51) zu klemmen.

9. Gleitringdichtungsanordnung nach einem der vorhergehenden Ansprüche, wobei ein Material des ersten Hülsenteils (51) unterschiedlich von einem Material des zweiten Hülsenteils (52) ist.

10. Gleitringdichtungsanordnung nach einem der vorhergehenden Ansprüche, wobei die Rastverbindung (6) wenigstens zwei Rastnasen (60) und wenigstens zwei Rastausnehmungen (61) aufweist.

## Claims

1. A mechanical seal arrangement comprising:
- a mechanical seal including a rotating slide ring (2) and a stationary slide ring (3) which define a sealing gap (4) between seal faces (21, 31),
- a shaft sleeve arrangement (5),
- wherein the rotating slide ring (2) is arranged on the shaft sleeve arrangement (5),
- **characterized in that**
- the shaft sleeve arrangement comprises a split shaft sleeve with a first annular sleeve part (51) and a second annular sleeve part (52) which are connected to each other by means of a snap-in connection (6),
- wherein the snap-in connection (6) comprises at least one snap-in nose (60) and one snap-in recess (61) receiving the snap-in nose (60) to allow the first sleeve part (51) to engage with the second sleeve part (52), and
- wherein the snap-in connection is a plug-and-turn connection.

2. The mechanical seal arrangement according to claim 1, wherein the snap-in connection (6) comprises a threaded arrangement including a thread flight (7).

3. The mechanical seal arrangement according to claim 2, wherein the snap-in recess (61) is arranged on the thread flight (7).

4. The mechanical seal arrangement according to claim 2 or 3, wherein a dam (70) is arranged between the thread flight (7) and the snap-in recess (61).

5. The mechanical seal arrangement according to claim 3 or 4, wherein the snap-in recess (61) is arranged at the end of a thread flight (7).

6. The mechanical seal arrangement according to one of claims 2 to 4, wherein an access recess (71) is arranged at the thread flight (7), which thread flight is arranged to allow the snap-in nose (60) to be guided to the thread flight (7).

7. The mechanical seal arrangement according to one of the preceding claims, wherein the first sleeve part (51) comprises a stop (53) on an outer circumference, the rotating slide ring (2) resting against the stop (53), and an elastomer seal (8) is arranged on the second sleeve part (52), the rotating slide ring (2) being arranged between the stop (53) and the elastomer seal (8).

8. The mechanical seal arrangement according to claim 7, wherein the snap-in connection (6) exerts a force (F) on the elastomer seal (8) in the axial direction (X-X) to clamp the rotating slide ring (2) between the elastomer seal (8) on the second sleeve part (52) and the stop (53) on the first sleeve part (51).

9. The mechanical seal arrangement according to one of the preceding claims, wherein a material of the first sleeve part (51) is different from a material of the second sleeve part (52).

10. The mechanical seal arrangement according to one of the preceding claims, wherein the snap-in connection (6) comprises at least two snap-in noses (60) and at least two snap-in recesses (61).

## Revendications

1. Ensemble joint d'étanchéité à bagues de glissement, comprenant :
- un joint d'étanchéité à bagues de glissement avec une bague de glissement (2) rotative et une bague de glissement (3) stationnaire qui définissent une fente d'étanchéité (4) entre des surfaces de glissement (21, 31),
- un ensemble manchon d'arbre (5),
- dans lequel la bague de glissement (2) rotative est agencée au niveau de l'ensemble manchon d'arbre (5),
- **caractérisé en ce que**
- l'ensemble manchon d'arbre (5) comporte un manchon d'arbre divisé avec une première partie de manchon (51) annulaire et une seconde partie de manchon (52) annulaire qui sont reliées entre elles au moyen d'une liaison d'encliquetage (6),
- dans lequel la liaison d'encliquetage (6) présente au moins un nez d'encliquetage (60) et un évidement d'encliquetage (61) recevant le nez d'encliquetage (60) afin de permettre un encliquetage de la première partie de manchon (51) avec la seconde partie de manchon (52), et
- dans lequel la liaison d'encliquetage est une liaison par enfichage et rotation.

2. Ensemble joint d'étanchéité à bagues de glissement selon la revendication 1, dans lequel la liaison d'encliquetage (6) comporte un ensemble de filetage avec un pas de filet (7).

3. Ensemble joint d'étanchéité à bagues de glissement selon la revendication 2, dans lequel l'évidement d'encliquetage (61) est agencé au niveau du pas de filet (7).

4. Ensemble joint d'étanchéité à bagues de glissement selon la revendication 2 ou 3, dans lequel un barrage (70) est agencé entre le pas de filet (7) et l'évidement d'encliquetage (61).

5. Ensemble joint d'étanchéité à bagues de glissement selon la revendication 3 ou 4, dans lequel l'évidement d'encliquetage (61) est agencé à l'extrémité d'un pas de filet (7).

6. Ensemble joint d'étanchéité à bagues de glissement selon l'une quelconque des revendications 2 à 4, dans lequel un évidement d'accès (71) est agencé au niveau du pas de filet (7), lequel est conçu afin de permettre une fourniture du nez d'encliquetage (60) au pas de filet (7).

7. Ensemble joint d'étanchéité à bagues de glissement selon l'une quelconque des revendications précédentes, dans lequel la première partie de manchon (51) présente une butée (53) au niveau d'une périphérie extérieure, dans lequel la bague de glissement (2) rotative repose contre la butée (53), et un joint d'étanchéité en élastomère (8) est agencé au niveau de la seconde partie de manchon (52), dans lequel la bague de glissement (2) rotative est agencée entre la butée (53) et le joint d'étanchéité en élastomère (8).

8. Ensemble joint d'étanchéité à bagues de glissement selon la revendication 7, dans lequel la liaison d'encliquetage (6) exerce une force (F) dans le sens axial (X-X) sur le joint d'étanchéité en élastomère (8) afin de serrer la bague de glissement (2) rotative entre le joint d'étanchéité en élastomère (8) au niveau de la seconde partie de manchon (52) et la butée (53) au niveau de la première partie de manchon (51).

9. Ensemble joint d'étanchéité à bagues de glissement selon l'une quelconque des revendications précédentes, dans lequel un matériau de la première partie de manchon (51) est différent d'un matériau de la seconde partie de manchon (52).

10. Ensemble joint d'étanchéité à bagues de glissement selon l'une quelconque des revendications précédentes, dans lequel la liaison d'encliquetage (6) présente au moins deux nez d'encliquetage (60) et au moins deux évidements d'encliquetage (61).
